Europäisches Patentamt

European Patent Office

Office européen des brevets

(11) Veröffentlichungsnummer: **0 075 714**
**B1**

(12) **EUROPÄISCHE PATENTSCHRIFT**

(45) Veröffentlichungstag der Patentschrift: **09.11.88**

(51) Int. Cl.⁴: **G 06 F 12/08**

(21) Anmeldenummer: **82107495.2**

(22) Anmeldetag: **17.08.82**

(54) Onchip Mikroprozessorcachespeicher und Verfahren zu seinem Betrieb.

(30) Priorität: **30.09.81 DE 3138972**

(43) Veröffentlichungstag der Anmeldung:
**06.04.83 Patentblatt 83/14**

(45) Bekanntmachung des Hinweises auf die
Patenterteilung:
**09.11.88 Patentblatt 88/45**

(84) Benannte Vertragsstaaten:
**DE FR GB**

(73) Patentinhaber: **Siemens Aktiengesellschaft**
**Berlin und München**
**Wittelsbacherplatz 2**
**D-8000 München 2 (DE)**

(72) Erfinder: **Gerner, Manfred, Dipl.-Ing.**
**Kleiststrasse 10**
**D-8012 Ottobrunn (DE)**

(56) Entgegenhaltungen:
US-A-3 618 041
US-A-4 084 230

IEEE INTERNATIONAL SOLID-STATE CIRCUITS
CONFERENCE, Band 24, 19. Februar 1981,
Seiten 112-113,261, New York, US; D.L. BUDDE
et al.: "The 32b computer execution unit"
ELECTRO/81, CONFERENCE RECORD, Band 6,
7.-9. April 1981, Sitzung 1/3, New York, US,
Seiten 1-8, Electronic Conventions, Inc., US; S.
WALTERS: "The architectural features of the Z8
family, a third generation microcomputer"

(58) References cited:

COMPUTER DESIGN, Band 9, Nr. 12, Dezember
1970, Seiten 24-25, Concord, US; "MECL III
offers the fastest"

IBM TECHNICAL DISCLOSURE BULLETIN,
Band 14, Nr. 12, Mai 1972, Seiten 3857-3859,
New York, US; C. KURTZ et al.: "Dynamically
paged control store buffer management"

## Beschreibung

Die Erfindung betrifft einen Cachespeicher nach dem Oberbegriff des Anspruchs 1.

Die kommende Generation von Mikrocomputern soll annähernd die Leistungsfähigkeit der herkömmlichen Großrechner (mainframe computer) erreichen. Durch Verbesserungen in der Technologie werden die Schaltkreise immer kleiner und damit schneller. Entsprechend steigt die Verarbeitungsgeschwindigkeit der Mikroprozessoren. Dies kann jedoch nur dann zu einer Leistungssteigerung des gesamten Systems führen, falls ein ebenso schneller Speicherzugriff möglich ist.

Abgesehen von single-chip Mikrocomputern für kleinere Anwendungen (z.B. SAB 8048) befindet sich der zugehörige Speicher bei handelsüblichen Computersystemen auf einem eigenen Halbleiter-Chip. Um Größe und Leistungsverbrauch von Treiberschaltkreisen in vernünftigen Grenzen zu halten, kann die externe Signalgeschwindigkeit der internen Signalgeschwindigkeit nicht angepaßt werden. Derzeit verhält sich off-chip-Übertragungszeit zu on-chip-Übertragungszeit wie 10:1. Durch zukünftige Erhöhungen des Intergrationsgrades auf Halbleiter-Chips ist eine weitere Vergrößerung dieser Geschwindigkeitslücke zu erwarten. Off-chip-Speicherzugriffe sind demnach wesentlich langsamer als on-chip-Speicherzugriffe. Für die Wirksamkeit künftiger Mikrocomputer ist es entscheidend, diesen zeitlichen Engpaß zu entschärfen. Ein wichtiges Ziel beim Entwurf dieser Mikrocomputer ist deshalb, so oft wie möglich off-chip-Datenwege zu vermeiden. Der Idealfall wäre, den gesamten Hauptspeicher auf dem Halbleiterchip zu integrieren. Technologisch ist es jedoch wegen des großen Platzbedarfs auf längere Sicht hin nicht möglich.

Um bei Großrechenanlagen möglichst billige, große und schnelle Speicher realisieren zu können, ist es bekannt, die Speicher eines Rechners hierarchisch aufzubauen. Dabei kann zwischen der Zentraleinheite des Rechners und dem Hauptspeicher des Rechners ein Cachespeicher als ein schneller Pufferspeicher geschaltet werden. Ein Cachespeicher dient dazu, die Geschwindigkeitslücke zwischen der Zentraleinheit des Rechners und dem Hauptspeicher des Rechners auszugleichen.

Derartige Cachespeicher sind z.B. aus der US—A—4 084 230, US—A—3 618 041 und aus IBM TDB Bd. 14, Nr. 12, Mai 1972, Seite 3857 bis 3859 bekannt. Diese Cachespeicher können aus einem assoziativen Teil und einem Schreiblesespeicher bestehen. (Computer Design, Bd. 9, Nr. 12, Des. 1970, S. 24—25). Fordert die Zentraleinheit eine bestimmte Information an, dann wird ein assoziativer Vergleich der Adresse dieser Information durchgeführt, um festzustellen, ob diese Information im Cachespeicher steht. Ist dies der Fall, dann wird die Information aus dem Cachespeicher zur Zentraleinheit übertragen. Ist dies nicht der Fall, dann wird die Information aus dem Hauptspeicher geholt und gleichzeitig die Information in den Cachespeicher geschrieben, zusammen mit der Umgebung dieser Information. Die Cachespeicher nach dem Stand der Technik dienen entweder zur Zwischenspeicherung von Datenworten und Befehlsworten (US—A—3 618 041), oder von Mikroprogrammworfen (S. oben gennannte IBM-schrift).

Aus IEEE International Solid State Circuits Conf. Bd. 24, 19.2.1981, S. 112, 113 und 261 ist ein Chip eines Mikroprozessors beschrieben, auf dem die Schaltkreise enthalten sind, mit dessen Hilfe Mikrobefehle ausgeführt werden. Auf diesem Chip sind weiterhin zwei voll assoziative Cachespeicher vorhanden, um Segmentadressen zwischenzuspreichern.

Die der Erfindung zugrundeliegende Aufgabe besteht darin, einen Cachespeicher der eingangs genannten Art anzugeben, welcher as ermöglicht, den Speicher eines Mikrocomputers so zu gestalten, daß die Kosten niedrig, die Kapazität groß und die Geschwindigkeit möglichst hoch sind.

Diese Aufgabe wird gemäß dem Kennzeichen des Patentanspruchs 1 gelöst.

Mit dem erfindungsgemäßen Cachespeicher ist eine wesentliche Leistungssteigerung bei einem Mikroprozessorsystem erzielbar. Dabei ist er relativ klein (1K Byte bis 10K Byte).

Der Cachespeicher ermöglicht ein variables Befehls- und Datenformat. Dies bedeutet, daß für Befehle und Daten keine festen Wortgrenzen vorgegeben sind, außer daß Befehle und Daten ein Vielfaches eines Bytes umfassen.

Der Cachespeicher ermöglicht dabei einen Zugriff auf Daten, Maschinenbefehle und Mikrobefehle und bewirkt für alle drei Speicherzugriffsarten eine Leistungssteigerung. Dabei wird der Cachespeicher Daten, Maschinenbefehlen und Mikrobefehlen nicht fest zugeordnet, vielmehr erfolgt diese Zuordnung auf der logischen Ebene. Denn auf physikalischer Ebene wird für diese drei Cachespeicher der logischen Ebene nur ein einziger RAM-Bereich verwendet. Dabei können den Seiten des physikalischen Cachespeichers beliebig Daten-Programm- und Mikroprogrammseiten zugeordnet werden. Der Speicherplatz für die drei logisch verschiedenen Cachespeicher ist variabel. Das Cachespeichersystem ist damit salbstregulierend und paßt sich dynamisch dem jeweiligen Anwenderprofil an (programm-, mikroprogramm-, oder datenintensiv). Dadurch ist eine besonders effektive Nutzung des Cachespeichers möglich.

Zur Verringerung der mittleren Zugriffszeit und der Busbelastung Cachespeicher/Leitwerk werden im Cachespeicher selbst Adreßregister geführt. Das Leitwerk braucht dann nur am Anfang einer Bytesequenz die jeweilige Startadresse an den Cachespeicher zu übergeben. Weitere Bytes einer solchen Bytesequenz werden lediglich durch Steuersignale vom Leitwerk angefordert.

Die Cachespeicher ist in Seiten (z.B. PAGE 1) zu je $2^n$ Bytes (Byte 0, Byte 1, ... Byte $2^n-1$) zuzüglich der jeweiligen assoziativen Subjekte AS unterteilt. Die jeweilige Seite wird über einen assoziativen Vergleich in der Adressenliste CAM (Directory) aktiviert. Die Adressenliste CAM (CAM = content adressable memory) ist zu diesem Zweck direkt gekoppelt mit einem Schreib-/Lesespeicher RAM, dem eigentlichen Cachespeicher. Vom Mikroprozessor wird eine Hauptspeicheradresse angelegt, dessen assoziatives Subjekt AS mit den in der Adressenliste CAM angelegten Adressen verglichen wird. Falls die vom Mikroprozessor angeforderte Hauptspeicherseite bereits im Cachespeicher vorhanden ist, wird die entsprechende Seite im Schreib-/Lesespeicher RAM des Cachespeichers aktiviert, wobei über einen Bytedecoder B/C entsprechend der relativen Byteadresse R der vom Mikroprozessor angelegten Hauptspeicheradresse ein Byte innerhalb der im Schreib-/Lesespeicher RAM des Cachespeichers aktivierten Seite ausgewählt wird.

Zur erfindungsgemäßen Realisierung der drei logischen Cachespeicherbereiche werden zwei Registersätze angeordnet. Der Registersatz 1 enthält einen Programmzähler PC, einen Mikroprogrammzähler MC und ein Datenadreßregister DR. Jedes dieser drei Register kann inkrementiert werden. Das Datenadreßregister kann zusätzlich noch dekrementiert werden, wodurch Stapelspeicher/(Stack)-Operationen unterstützt werden. Der Inhalt jedes Zählers PC, MC, DR kann über Bus A ausgelesen bzw. eingegeben werden. Der zweite zur erfindungsgemäßen Realisierung der drei logischen Cachespeicherbereiche nötige Registersatz 2 besteht aus Befehlsregister IR, Mikroprogrammbefehlsregister MR, Datenregister DA. Der Inhalt jedes Registers IR, MR, DA kann sowohl auf Bus B als auch an den Cachespeicher (Daten) übergeben werden. Geladen werden die Register IR, MR, DA sowohl über Bus B als auch vom Cachespeicher. Dem Registersatz 2 (IR, MR, DA) werden die vom Leitwerk angeforderten Bytes aus dem Cachespeicher in ausgerichteter bzw. stellenrichtiger Form übergeben.

Zur Steuerung des intelligenten Cachespeichers dient eine Steuerung (Controller) CON. Die Steuerung CON verarbeitet folgende Steuersignale:

### PROGRAM, MICROPROGRAM, DATA

Über diese drei Steuersignale wird einer der drei logischen Cachespeicherbereiche ausgewählt, nämlich Programmcachespeicher, Mikroprogrammcachespeicher, Datencachespeicher.

### R/W

Über diese Steuersignale wird angegeben, ob Daten gelesen oder geschrieben werden.

### READ PC

Je nach dem gewählten logischen Cachespeicherbereich wird der Inhalt des entsprechenden Zählers (PC bzw. MC bzw. DR) über den Bus A an das Leitwerk übergeben. Das Leitwerk benötigt daher keine eigenen Zähler. Dies bewirkt eine Flächeneinsparung auf dem Halbleiter-Chip, eine Entlastung der Leitwerklogik und eine Erhöhung der Operationsgeschwindigkeit.

### NEWADRESS

Mit diesem Steuersignal wird eine neue Befehls- bzw. Datensequenz angefordert. Die Anfangsadresse dieser neuen Befehls- bzw. Datensequenz wird auf den Bus A übergeben.

### CONTINUE

Mit diesem Steuersignal werden weitere Bytes innerhalb eines einzelnen Befehls bzw. Datums stellenrichtig gewünscht. Das Anlegen einer Adresse ist dabei nicht erforderlich.

### NEXT

Mit diesem Steuersignal wird ein neuer Befehl bzw. ein neues Datum innerhalb einer Befehlssequenz bzw. einer Datensequenz angefordert. Das Anlegen einer Adresse ist dabei nicht erforderlich.

### BYTENUMBER

Mit diesem Steuersignal wird die Zahl der Bytes angegeben, die vom Leitwerk gewünscht werden.

### REPEAT

Bei Anlegen dieses Steuersignals wird die zuletzt vom Leitwerk angeforderte Bytesequenz nochmals an das Leitwerk übergeben.

### READY

Von der Steuerung CON wird das READY-Signal gesetzt, wenn ein Cachespeicherzyklus beendet ist, d.h. wenn die gewünschte Bytesequenz auf Bus B bereit liegt. Dad Leitwerk kann dann bei gesetztem READY-Signal die gewünschte Byte-sequenz übernehmen.

Beim Nachfordern von Bytes durch das Leitwerk kann beim Anlegen der Steuersignale NEXT bzw. CONTINUE die Seitengrenze von im Cachespeicher gespeicherten Seiten überschritten werden. Dieses Überschreiten einer Seitengrenze wird durch einen Übertrag von BIT n-1 nach BIT n in Registersatz 1 (PC, MC, DR) angezeigt. Wird ein solcher Übertrag in Registersatz 1 angezeigt, so muß ein neuer Seitenzugriff initialisiert werden. Ein neuer Seitenzugriff wird durch ein Nachschlagen in der Adressenliste CAM eingeleitet. Die Schnittstelle Cachespeicher/Leitwerk bleibt von diesem Nachschlagen in der Adressenliste CAM unbeeinflußt.

Der Cachespeicher erfüllt Aufgaben, die zu einer Entlastung des Leitwerks und somit zu einer Leistungssteigerung des Mikrocomputers führen. Der erfindungsgemäße Cachespeicher ist ein intelligenter on-chip Mikroprozessorcachespeicher. Durch die Erfindung ist das Nachschlagen in der Adressenliste CAM auf ein Minimum reduziert. Die Erfindung ermöglicht es, den Inhalt einer Seite im Cachespeicher solange aktiv zu halten, bis eine neue Befehlssequenz bzw. Datensequenz vom Leitwerk angefordert wird. Die angeforderten Bytes innerhalb einer Befehlssequenz bzw. Datensequenz können innerhalb sehr kurzer Zeit dem Leitwerk seriell übergeben werden. Das zeitintensive Nachschlagen in der Adressenliste CAM entfällt in vielen Fällen. Dadurch ist es möglich, den Zeitverlust der byteweisen gegenüber einer wortweisen Speicherorganisation auszugleichen. Wird die Seitengrenze einer Seite im Cachespeicher überschritten, ist ein Nachschlagen in der Adressenliste CAM und ein eventuelles Nachladen einer neuen Seite notwendig. Die Schnittstelle zum Leitwerk bleibt davon unbeeinflußt. Das Leitwerk legt nur zu Beginn einer Sequenz eine Adresse an. Das Überschreiten der Seitengrenze wird allein vom Cachespeicher erkannt. Untersuchungen über die durchschnittliche Länge von Befehlssequenzen bzw. Datensequenzen bestimmen u.a. die Größe einer Seite. Eine weitere Erniedrigung der Zugriffszeit erhält man durch Bereitstellen des folgenden Bytes bereits vor dem Zugriff (prefetch), wobei der Cachespeicher das nächste Byte bereits im voraus zur Verfügung stellt. Es besteht nämlich eine große Wahrscheinlichkeit, daß das Leitwerk dieses folgende Byte anfordert.

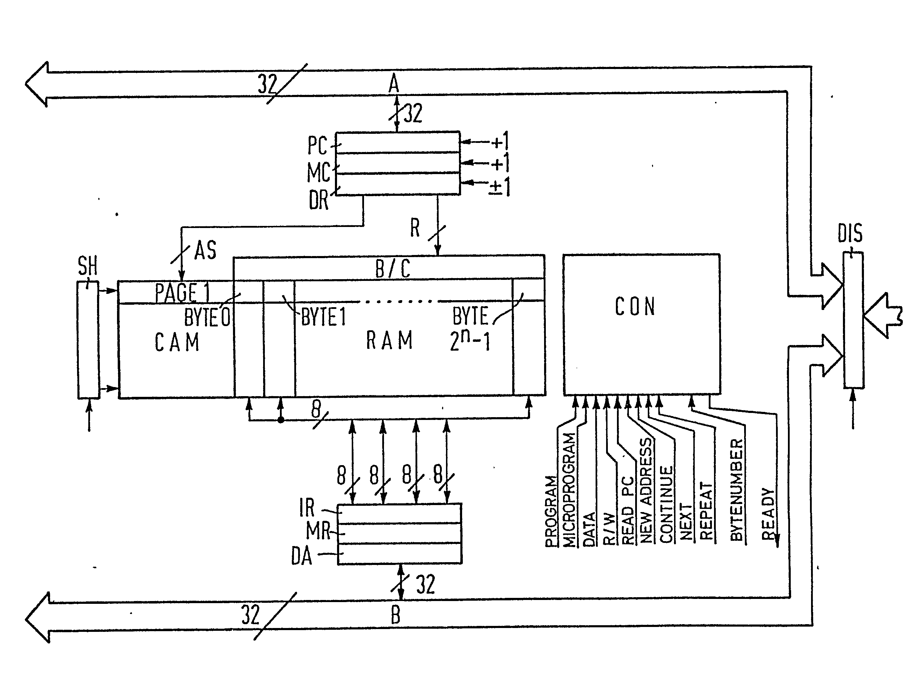

**Patentansprüche**

1. Cachespeicher bestehend aus einem Assoziativspeicher (CAM) und aus einem Schreiblesespeicher (RAM) gekennzeichnet durch folgende Merkmale:
— der Cachespeicher ist auf einem Mikroprozessorchip integriert,
— er ist auf der logischen Ebene in einen Programmcachespeicher, einen Mikroprogrammcachespeicher und einen Datencachespeicher variabler Größe teilbar.

2. Cachespeicher nach Anspruch 1, gekennzeichnet durch zwei Registersätze, nämlich einen ersten Registersatz bestehend aus einem Programmzähler (PC), einem Mikroprogrammzähler (MC), ein Datenadreßregister (DR), und einen zweiten Registersatz bestehend aus einem Befehlsregister (IR), einem Mikroprogrammbefehlsregister (MR) und einem Datenregister (DA).

3. Cachespeicher nach Anspruch 1 oder 2, gekennzeichnet durch eine Unterteilung in Seiten zu je $2^n$ Bytes zuzüglich der zugehörigen assoziativen Subjekte (AS).

4. Verfahren zum Betrieb eines Cachespeichers nach einem der Ansprüche 1 bis 3, dadurch gekennzeichnet, daß ein Leitwerk nur am Anfang einer Informationssequenz die Startadresse an den Cachespeicher übergibt, wobei weitere Informationen innerhalb dieser Informationssequenz lediglich durch Steuersignale angefordert werden.

5. Verfahren zum Betrieb eines Cachespeichers nach einem der Ansprüche 1 bis 3, dadurch gekennzeichnet, daß eine Seite des Cachespeichers über einen assoziativen Vergleich im Assoziativspeicher (CAM) aktiviert wird.

6. Verfahren zum Betrieb eines Cachespeichers nach Anspruch 2 oder 3, dadurch gekennzeichnet, daß, falls beim Nachfordern von Informationen die Seitengrenze überschritten wird, dies durch einen Übertrag von bit n-1 nach bit n im Registersatz 1 (PC, MC, DR) angezeigt wird und daß sodann im Assoziativspeicher (CAM) ein Nachschlagen und ein eventuelles Nachladen angestoßen wird.

**Revendications**

1. Antémémoire constituée par une mémoire associative (CAM) et par une mémoire d'enregistrement et de lecture (RAM), caractérisée par les caractéristiques suivantes:
— l'antémémoire est intégrée sur une microplaquette de microprocesseur,
— elle peut être subdivisée, au plan logique, en une antémémoire de programmes, une antémémoire de microprogrammes et une antémémoire de données de taille variable.

2. Antémémoire suivant la revendication 1, caractérisée par deux ensembles de registres, à savoir un premier ensemble de registres constitué par un compteur de programmes (PC), un compteur de microprogrammes (PC), un registre d'adresses de données (DR), et un second ensemble de registres constitué par un registre d'instructions (IR), un registre (MR) d'instructions de microprogrammes et un registre de données (DA).

3. Antémémoire suivant la revendication 1 ou 2, caractérisée par une subdivision en pages contenant chacune $2^n$ octets plus les sujets associatifs associés (AS).

4. Procédé pour faire fonctionner une antémémoire suivant l'une des revendications 1 à 3, caractérisé par le fait que l'unité de commande transfère uniquement au début d'une séquence d'informations, l'adresse de départ dans l'antémémoire, des informations supplémentaires à l'intérieur de cette séquence d'informations étant demandées uniquement par des signaux de commande.

5. Procédé pour faire fonctionner une antémémoire suivant l'une des revendications 1 à 3, caractérisé par le fait qu'une page de l'antémémoire est activée au moyen d'une comparaison associative exécutée dans la mémoire associative (CAM).

6. Procédé pour faire fonctionner une antémémoire suivant la revendication 2 ou 3, caractérisé par le fait que, dans le cas où la limite d'une page est dépassée lors de la demande complémentaire d'informations, ceci est affiché au moyen d'un report du bit n-1 après le bit n dans l'ensemble de registres 1 (PC, MC, DR) et que par conséquent une consultation et un éventuel chargement complémentaire sont déclenchés dans la mémoire associative.

**Claims**

1. A cache store comprising an associative store (CAM) and a write/read store (RAM), characterised by the following features:
— the cache store is integrated in a microprocessor chip,
— it can be divided on the logic level into a programme cache store, a micro-programme cache store and a data cache store of variable size.

2. A cache store as claimed in claim 1, characterised by two register sets, namely a first register set comprising a programme counter (PC), a micro-programme counter (MC), a data address register (DR), and a second register set comprising a command register (IR), a micro-programme command register (MR) and a data register (DA).

3. A cache store as claimed in claim 1 or claim 2, characterized by a sub-division into pages each comprising $2^n$ bytes plus the relevant associative subjects (AS).

4. A method of operating a cache store as claimed in one of the claims 1 to 3, characterised in that a control unit transfers the start address to the cache store only at the start of an information sequence, where further information items within this information sequence are requested only by control signals.

5. A method of operating a cache store as claimed in one of the claims 1 to 3, characterised in that a page of the cache store is activated via an associative comparison in the associative store (CAM).

6. A method of operating a cache store as claimed in claim 2 or claim 3, characterised in that if, in the event of subsequent requests for information, the page limit is overshot, this is indicated by a carry of bit n-1 to bit n in the register set 1 (PC, MR, DR) and that then a look-up and, where appropriate, re-loading is initiated in the associative store (CAM).

DIS

CON

PROGRAM
MICROPROGRAM
DATA
R/W
READ PC
NEW ADDRESS
CONTINUE
NEXT
REPEAT
BYTENUMBER
READY

PC
MC
DR

$\pm 1$

A
32

R

B/C

BYTE1

BYTE $2^n-1$

RAM

BYTE0

PAGE1

CAM

AS

SH

IR
MR
DA

B
32

8 8 8

8

32

32